Europäisches Patentamt

European Patent Office

Office européen des brevets

(19)

(11) Numéro de publication: **0 065 898**
**B1**

## (12) FASCICULE DE BREVET EUROPEEN

(45) Date de publication du fascicule du brevet:
**21.08.85**

(21) Numéro de dépôt: **82400810.6**

(22) Date de dépôt: **04.05.82**

(51) Int. Cl.⁴: **B 32 B 27/32**

(54) **Films thermoplastiques complexes et leur procédé d'obtention.**

(30) Priorité: **15.05.81 FR 8109684**

(43) Date de publication de la demande:
**01.12.82 Bulletin 82/48**

(45) Mention de la délivrance du brevet:
**21.08.85 Bulletin 85/34**

(84) Etats contractants désignés:
**AT BE CH DE GB IT LI LU NL SE**

(56) Documents cités:
**BE - A - 891 751**
**FR - A - 1 521 293**
**FR - A - 1 579 322**
**FR - A - 2 005 501**
**FR - A - 2 070 723**

(73) Titulaire: **Société Chimique des Charbonnages S.A., Tour Aurore Place des Reflets, F-92080 Paris La Défense Cédex 5 (FR)**

(72) Inventeur: **Decroix, Jean-Claude, rue de la Forge aux Fers Saint Nicolas les Arras, F-6200 Arras (FR)**

(74) Mandataire: **Dubost, Thierry, SOCIETE CHIMIQUE DES CHARBONNAGES Service Propriété Industrielle B.P. 57, F-62670 Mazingarbe (FR)**

EP 0 065 898 B1

BUNDESDRUCKEREI BERLIN

## Description

L'invention concerne des films thermoplastiques complexes et leur procédé d'obtention.

Il est connu dans l'industrie de l'emballage, compte tenu qu'aucune matière plastique ne réunit à elle seule toutes les caractéristiques exigées par les utilisateurs, d'associer entre elles de matières plastiques de familles différentes de façon à cumuler des caractéristiques positives complémentaires. On sait donc réaliser selon ce principe des films complexes pour l'emballage. Parmi les propriétés que l'on cherche fréquemment à associer dans un tel film, figurent notamment l'imperméabilité à l'eau et aux gaz, la tenue chimique en particulier vis-à-vis des corps gras, la tenue à la empérature à chaud et à froid, la soudabilité, la transparence, la résistance mécanique, etc. . . De plus lorsque l'adhésion entre deux telles matières plastiques de familles différentes est mauvaise, il est connu d'utiliser une couche intermédiaire constituée d'un matériau capable d'adhérer à chacune d'elles, tel que par exemple un terpolymère d'éthylène, acide (méth)acrylique et (méth)acrylate de sodium.

Le FR-A-2 005 501 décrit des feuilles stratifiées obtenues par dépot d'une couche d'un copolymère comprenant de 71% à 90% en poids d'éthylène, 3% à 9% en poids d'un acide carboxylique éthylénique contenant 3 à 5 atomes de carbone, de préférence l'acide (méth)acrylique et 1% à 20% en poids de l'ester (méth)acrylique d'un alcool tertiaire saturé contenant 4 à 8 atomes de carbone.

L'industrie de l'emballage est à la recherche constante d'une amélioration des propriétés mécaniques, de soudabilité et d'adhérence des films complexes. C'est pourquoi le but de la présente invention est de procurer à cette industrie des films améliorés, aisés et économiques à produire, par le choix d'une nouvelle matière plastique.

Les films complexes selon l'invention sont constitués de:

et sont caractérisés en ce que le copolymère dudit film
— au moins une couche d'épaisseur comprise entre 25 et 3000 μm d'un film réalisé à partir d'un matériau thermoplastique choisi parmi polyéthylène basse densité, polypropylène, polybutène, polyamide, polystyrène et polychlorure de vinyle.
— et d'une couche d'épaisseur comprise entre 10 et 100 μm d'un film de copolymère et sont caractérisés en ce que le copolymère dudit film comprend de 88 à 98,7% en moles de motifs dérivés de l'éthylène, de 1 à 10% en moles de motifs dérivés d'un ester choisi parmi les acrylates et méthacrylates d'alkyle, ledit groupe alkyle ayant de 1 à 6 atomes de carbone et de 0,3 à 3% en moles de motifs dérivés de l'anhydride maléique.

Ainsi l'invention englobe d'une part des films complexes à deux couches et d'autre part des films complexes dans lesquels la couche de copolymère joue le rôle de couche intermédiaire entre deux couches de matériau thermoplastique. L'épaisseur préférée de la couche de matériau thermoplastique dépend de la nature de ce dernier. Elle est par exemple de 25à 100 μm pour le polyéthylène basse densité, le polypropylène, le polybutène-1 et le polyamide, de 25 à 2000 μm pour le polychlorure de vinyle, de 100 à 3000 μm pour le polystyrène.

Certains copolymères utilisés dans le cadre de la présente invention ont été décrits dans le brevet français n° 1 323 379. Des copolymères particuliers également utilisables sont caractérisés notamment par un indice de polydispersité supérieur à 6. Ils peuvent, le cas échéant, comprende un quatrième monomère copolymérisable avec les trois premiers, choisi parmi les α-oléfines ayant de 3 à 8 atomes de carbone, les monomaléates d'alkyle et les maléates de dialkyle dont les groupes alkyle ont de 1 à 6 atomes de carbone, l'acétate de vinyle, le monoxyde de carbone, présent à raison de jusqu'à 5% en moles, la proportion de motifs dérivés de l'éthylène dans le tétrapolymère étant alors diminuée d'autant par rapport à la gamme indiquée ci-dessus.

Le procédé de fabrication de ces derniers copolymères consiste à copolymériser, en présence d'au moins un initiateur de radicaux libres, un mélange composé de 94 à 99% en poids d'éthylène, de 0,7 à 5% en poids d'ester (méth)acrylique et de 0,2 à 0,9% en poids d'anhydride maléique dans un réacteur maintenu sous une pression de 1000 à 3000 bars et à une température de 170° à 280°C, à détendre puis à séparer le mélange de monomère et du terpolymère formé dans le réacteuer, et enfin à recycler vers le réacteur le mélange d'éthylène et de monomères précédemment séparé, le flux recyclé compenant de 99 à 99,8% d'éthylène et de 0,2 à 1% d'ester (méth)acrylique.

Le polypropylène et le plybutène utilisables dans le cadre de la présente invention sont de préférence des polymères isotactiques. Par polyéthylène basse densité au sens de la présente invention on entend des homopolymères de l'éthylène obtenus enprésence d'initiateurs de radicaux libres. Enfin parmi les polyamides utilisables dans le cadre de la présente invention figurent les polylactames, les polyamides à base d'acides dicarboxyliques et de diamines, en particulier d'acides dicarboxyliques aliphatiques comprenant de 6 à 19 atomes de carbone et de diamines aliphatiques ou cycloaliphatiques comprenant de 6 à 15 atomes de carbone.

Le film de copolymère d'épaisseur comprise entre 10 et 100 μm utilisé dans le cadre de la présente invention peut être obtenu à partir d'un copolymère tel que décrit ci-dessus ayant un indice de fluidité compris entre 1 et 10 dg/min et comprenant de préférence de 0,3 à 1% en moles de motifs dérivés de l'anhydride maléique. Ce film peut avoir une épaisseur comprise entre 10 et 100 μm lorsqu'il est obtenu à travers une filière plate et une épaisseur comprise entre 25 et 100 μm lorsqu'il est obtenu par extrusion-soufflage à travers une filière cylindrique.

Le procédé d'obtention des films complexes selon l'invention consiste en la co-extrusion, avec une vitesse d'avancement comprise entre 2 et 200 mètres par minute, du copolymère et du matériau thermoplastique à une température comprise entre 140° et 260° C et par un moyen choisi parmi la filière cylindrique à taux de gonflage compris entre 1 et 4 et la filière plate. Le moyen de la filière plate sera choisi de préférence d'une part lorsque la couche de copolymère doit être inférieure à 25 μm et d'autre part lorsque la couche de matériau thermoplastique doit être supérieure à 100 μm.

Les film complexes selon l'invention ont des propriétés remarquablement améliorées, par rapport aux films complexe utilisant une couche de terpolymère d'éthylène, acide (méth)acrylique et (méth)acrylate de sodium. Cette amélioration est particulièrement sensible pour les propriétés dynamométriques telles que l'allongement et la résistance à la rupture, qui sont mieux équilibrées dans les sens longitudinal et transversal; pour la résistance des soudures à des températures de scellage comprises entre 150° et 190° environ; pour la résistance au pelage qui mesure la force d'adhésion des deux couches l'une à l'autre.

Compte tenu de ces propriétés améliorées, les films complexes selon l'invention trouvents des applications privilégiées dans l'emballage des produits alimentaires et non-alimentaires.

### Exemple 1

#### Fabrication d'un terpolymère éthylène/acrylate d'éthyle/anhydride maléique

On considère un réacteur autoclave cylindrique comprenant trois zones d'un volume de 1 litre chacune et équipé d'un agitateur à palettes. Les zones sont séparées par des écrans à soupape. L'éthylène frais comprimé par unprmier compresseur alimente la première zone. La seconde zone est alimentée par un mélange homogène de 98,9% en poids d'éthylène, 0,25% en poids d'anhydride maléique et 0,85% en poids d'acrylate d'éthyle. Enfin une solution d'éthyl-2 perhexanoate de terbutyle dans une coupe d'hydrocarbures est injectée dans le troisième zone. Celle-ci constitue donc la seule zone réactionnelle puisqu'elle met en présence les trois comonomères et un initiateur de radicaux libres. Elle est maintenue à une température de 230° C et le réacteur est maintenu sous une pression de 1600 bars. Au fond de la troisième zone du réacteur est placée une vanne de détente permettant d'abaisser la pression à 300 bars. Le mélange du polymère fondu d'une part et des monomères gazeux d'autre part, après avoir traversé la vanne de détente, passe dans une trémie séparatrice. Tandis que le polymère est recueilli au fond de la trémie, les monomères sont acheminés, après passage à travers une trémie de dégraissage, vers un second compresseur. D'autre part une solution d'anhydride maléique dans l'acrylate d'éthyle est pompée sous pression et acheminée vers l'entrée d'un homogénéiseur de type Venturi où elle est mélangée au flux des monomères recyclés provenant du second compresseur. A la sortie de ce dispositif Venturi, le mélange des trois monomères est acheminé vers un homogénéiseur en spirale puis transféré à la seconde zone du réacteur.

A la sorite de la trémie séparatrice, le terpolymère fabriqué est analysé par spectrophotométrie infrarouge : il comporte 1,3% en moles de motifs acrylate d'éthyle et 0,4% en moles de motifs anhydride maléique. Son indice de fluidité, déterminé selon la norme ASTM D 1238-73, est de 3,8 dg/min. Sa masse volumique, déterminée selon la norme ASTM D 2839, est de 0,930 g/cm3.

### Exemples 2

#### (comparatif) et 3 — Films complexes

On effectue, au moyen d'une boudineuse à filière cylindrique, la co-extrusion d'un polyamide commercialisé sous la référence KL 1/2096 et d'un terpolymère de telle sorte que le film complexe obtenu comprenne une coche de polyamide d'épaisseur 40 μm et une couche de terpolymère d'épaisseur 65 μm. La température de co-extrusion est égale à 240° C et le taux de gonflage est maintenu égal à 1,5.

Le terpolymère utilisé dans l'exemple 2 est un ionomère, commercialisé sous le nom de Surlyn 1652, comprenant 90% de motifs éthylène, 7% de emotifs méthacrylate de sodium et 3% de motifs acide méthacrylique. Le terpolymère utilisé dans l'exemple 3 est celui obtenu et caractérisé à l'exemple 1 ci-dessus.

Sur les films complexes ainsi obtenus, d'épaisseur totale 105 μm, on mesure les propriétés dynamométriques suivantes:

—  résistance à la rupture dans les sens longitudinal (RRL) et transversal (RRT), mesurée selon la norme ASTM D 882-67 et exprimée en kg/cm 2 (1 kg/cm$^2$ = 0,098 MPa)
—  allongement à la rupture dans les sens longitudinal (ARL) et transversal (ART), mesuré selon la norme ASTM D 882-67 et exprimé en pourcentage.
— résistance au pelage dans les sens longitudinal (RPL) et transversal (RPT), mesurée selon la norme ASTM D 903—49 modifiée en ce qui concerne la largeur de la bande de polymère (35 mm au lieu de 25 mm), et exprimée en kiligrammes (1 kg = 9.81 N).

On mesure également sur ces films complexes, selon la norme NF-K 03-004, la résistance de soudures (R. S.) exprimée en kilogrammes effectuées à des températures de scellage différentes:

— d'une part, pour une température de scellage de 150° C, la résistance des soudures à temps constant (1,5 seconde) sous une contrainte de 3,5 bars.
— d'autre part, pour une température de scellage de 180° C, la résistance des soudures à contrainte constante (2 bars) après un temps de 3 secondes.

Les résultats de ces différentes mesures sont rassemblés dans le tableau ci-après.

Tableau

| Exemple | RRL | RRT | ARL | ART | RPL | RPT | RS 150° | 180° |
|---|---|---|---|---|---|---|---|---|
| 2 | 215 | 258 | 295 | 370 | 1,4 | 1,1 | 5,1 | 5,1 |
| 3 | 229 | 237 | 402 | 423 | 2,1 | 2,2 | 5,4 | 5,3 |
| 4 | — | | — | | 0,25 | | 1,0 | |
| 5 | — | | — | | 1,4 | | 1,0 | |

Exemples 4

(comparatif) et 5 — Films complexes

On effectue, dans les mêmes conditions opératoires qu'aux exemples précédents, la coectrusion d'un polyamide commercial KL1/2096 et d'un terpolymère, de telle sorte que le film complexe obtenu comprenne une couche de polyamide d'épaisseur 50 μm et une couche de terpolymère d'épaisseur 50 μm. Le terpolymère utilisé dans l'exemple 4 est le ionomère Surlyn 1652 déjà cité, tandis que le terpolymère utilisé dans l'exemple 5 est celui obtenu et caractérisé à l'exemple 1 ci-dessus. Sur les films complexes ainsi obtenus, d'épaisseur totale 100 μm, on mesure:

— d'une part le résistance au pelage la norme ASTM D 903-49 modifiée en ce qui concerne la largeur de la bande de polymère (35 mm au lieu de 25 mm), exprimée en kilogrammes.
— d'autre part la résistance de soudures effectuées à une température de scellage de 160° C.

Les résultats de ces mesures sont rassemplés dans le tableau précédent.
»Surlyn« est une marque commerciale déposée de la Société DUPONT de NEMOURS.

## Revendications

1. Film complexe constitué d'au moins une couche d'épaisseur comprise entre 25 et 3000 μm d'un film réalisé à partir d'un matériau thermoplastique choisi parmi polyéthylène basse densité, polypropylène, polybutène, polyamide, polystyrène et polychlorure de vinyle et d'une couche d'épaisseur comprise entre 10 et 100 μm d'un film de copolymère, caractérisé en ce que le copolymère dudit film comprend de 88 à 98,7% en moles de motifs dérivés de l'éthylène, de 1 à 10% en moles des motifs dérivés d'un ester choisi parmi les acrylates et méthacrylates d'alkyle, ledit groupe alkyle ayant de 1 à 6 atomes de carbone et de 0,3 à 3% en moles de motifs dérivés de l'anhydride maléique.

2. Film complexe selon la revendication 1, caractérisé en ce que le copolymère a un inice de fluidité compris entre 1 et 10 dg/min.

3. Film complexe selon l'une des revendications 1 et 2, caractérisé en ce que ledit copolymère comprend de 0,3 à 1% en moles de motifs dérivés de l'anhydride maléique.

4. Film complexe selon l'une des revendication 1 à 3, modifié en ce que ledit copolymère comprend en outre jusqu'à 5% en moles d'un quatrième monomère choisi parmi les ι-oléfines ayant de 3 à 8 atomes de carbone, les monomaléates d'alkyle et les maléates de dialkyle dont les groupes alkyle ont de 1 à 6 atomes de carbone, l'acétate de vinyle, le monoxyde de carbone, la proportion de motifs dérivés de l'éthylène étant alors diminuée d'autant par rapport à la gamme indiquée dans la révendication 1.

5. Film complexe selon l'une des revendications 1 à 4, caractérise en ce que l'indice de polydispersité du copolymère est supérieur à 6.

6. Procédé d'obtention d'un film complexe selon la revendication 1, caractérisé en ce qu'il coniste en la coextrusion, avec une vitesse d'avencement comprise entre 2 et 200 mètres par minute, du copolymère et du matériau thermoplastique à une température comprise entre 140° et 260°C et par un moyen choisi parmi la filière cylindrique à taux de gonflage compris entre 1 et 4 et la filière plate.

## Patentansprüche

1. Verbundfolie bestehend aus mindestens einer zwischen 25 und 3000 μm dicken Schicht aus einem Film, der aus einem thermoplastischen Material hergestellt ist, das ausgewählt ist aus der Gruppe bestehend aus Polyäthylen niedriger Dichte, Polypropylen, Polybuten, Polyamid, Polystyrol und Polyvinylchlorid, und aus einer zwischen 10 und 100 μm dicken Schicht aus einem Copolymerfilm, dadurch gekennzeichnet, daß das Copolymer des genannten Films 88 bis 98,7 Mol-% an von Äthylen stammenden Einheiten und 1 bis 10 Mol-% an von einem Ester stammenden Einheiten aufweist, welcher Ester ausgewählt ist aus den Alkylacrylaten und -methacrylaten, wobei die genannte Alkylgruppe 1 bis 6 Kohlenstoffatome und 0,3 bis 3 Mol-% an von Maleinsäureanhydrid stammenden Einheiten aufweist.

2. Verbundfolie nach Anspruch 1, dadurch gekennzeichnet, daß das Copolymer einen Fließindex zwischen 1 und 10 dg/min besitzt.

3. Verbundfolie nach Anspruch 1 oder 2, dadurch gekennzeichnet, daß das Copolymer 0,3 bis 1 Mol-% an von Maleinsäureanhydrid stammenden Einheiten aufweist.

4. Verbundfolie nach einem der Ansprüche 1 bis 3, dadurch abgeändert, daß das Copolymer außerdem bis zu 5 Mol-% eines vierten Monomers enthält, das ausgewählt ist aus der Gruppe bestehend aus den $\alpha$-Olefinen mit 3 bis 8 Kohlenstoffatomen, den Alkylmonomaleaten und den Dialkylmaleaten, deren Alkylgruppen 1 bis 6 Kohlenstoffatome besitzen, Vinylacetat und Kohlenmonoxid, wobei dann der Anteil an von Äthylen stammenden Einheiten gegenüber dem im Patentanspruch 1 angegebenen Bereich in demselben Maße verringert ist.

5. Verbundfolie nach einem der Ansprüche 1 bis 4, dadurch gekennzeichnet, daß die Polydispersitätszahl des Copolymers größer als 6 ist.

6. Verfahren zur Herstellung einer Verbundfolie nach Anspruch 1, gekennzeichnet durch die Koextrusion mittels eines zylindrischen Spritzmundstückes mit einem Aufblasverhältnis zwischen 1 und 4 oder eines flachen Spritzmundstückes des Copolymers und des thermoplastischen Materials mit einer Vorschubgeschwindigkeit zwischen 2 und 200 m/min und bei einer Temperatur zwischen 140° und 260°C.

## Claims

1. A composite film consisting of at least one layer of a thermoplastic film having a thickness of from 25 to 3 000 μm and selected from the group consisting of low density polyethylene, polypropylene, polybutene, polamide, polystyrene and polyvinyl chloride and a layer of a copolymer film having a thickness of from 10 to 100 μm, characterized in that the copolymer of said film comprises from 88 to 98.7 mol% of units derived from ethylene, from 1 to 10 mol% of units derived from an ester selected from the group consisting of alkyl acrylates and alkyl methacrylates, the alkyl group having from 1 to 6 carbon atoms, and from 0.3 to 3 mol% of units derived from maleic anhydride.

2. A composite film according to claim 1, characterized in that the copolymer has a melt index of between 1 and 10 dg/min.

3. A composite film according to one of claims 1 and 2, characterized in that the copolymer contains from 0.3 to 1 mol% of units derived from maleic anhydride.

4. A composite film according to any of claims 1 to 3, modified in that the copolymer additionally contains up to 5 mol% of a fourth monomer selected from the group consisting of $\alpha$-olefins having from 3 to 8 carbon atoms, alkyl monomaleates and dialkyl maleates, whose alkyl groups have from 1 to 6 carbon, vinyl acetate and carbon monoxide, the proportion of units derived from ethylene being then reduced by that much with respect to the range indicated in claim 1.

5. A composite film according to any of claims 1 to 4, characterized in that the polydispersity index of the copolymer is greater than 6.

6. A process for obtaining the composite film of claim 1, comprising coextruding at a speed of travel of between 2 and 200 meters per minute, the copolymer and the thermoplastic at e temperature of between 140° and 260°C and through a means selected from a cylindrical die with a blow-up ration of between 1 and 4 and a flat die.